Europäisches Patentamt

European Patent Office

Office européen des brevets

(11) Veröffentlichungsnummer: **0 265 620**
**A2**

(12) **EUROPÄISCHE PATENTANMELDUNG**

(21) Anmeldenummer: **87112351.9**

(22) Anmeldetag: **25.08.87**

(51) Int. Cl.4: **G01N 15/08** , G01N 15/02 ,
B07B 1/00

(30) Priorität: **27.10.86 DE 3636481**

(43) Veröffentlichungstag der Anmeldung:
**04.05.88 Patentblatt 88/18**

(84) Benannte Vertragsstaaten:
**AT CH DE ES FR GB IT LI NL SE**

(71) Anmelder: **Altenburger Electronic GmbH**
**Postfach 40**
**D-7633 Seelbach(DE)**

(72) Erfinder: **Siegfried, Hans-Günther**
**Ludwig-Thoma-Strasse 15**
**D-8520 Erlangen(DE)**

(74) Vertreter: **Eder, Eugen, Dipl.-Ing. et al**
**Patentanwälte Dipl.-Ing. E. Eder Dipl.-Ing. K.**
**Schieschke Elisabethstrasse 34**
**D-8000 München 40(DE)**

(54) **Verfahren zur Herstellung von Mikroprüfkörpern zur Porengrössenmessung in Ultra- und Mikrofiltern sowie hiernach hergestellte Prüfkörper.**

(57) Das Verfahren zur Herstellung von Mikroprüfkörpern zur Porengrößenmessung in Ultra- und Mikrofiltern sieht vor, daß runde Glas-, Quarz- oder Metallkugeln mit in größerem Toleranzbereich liegenden Durchmessern verwendet werden und daß zur Erzeugung der Prüfkörper diese Kugeln durch Porenmasken aus Kunststoff oder Metall mit vorbestimmten Porengrößen hindurchbewegt und dadurch ausselektiert werden.

FIG. 1

EP 0 265 620 A2

# Verfahren zur Herstellung von Mikroprüfkörpern zur Porengrößenmessung in Ultra-und Mikrofiltern sowie hiernach hergestellte Prüfkörper

Die Erfindung betrifft ein Verfahren zur Herstellung von Mikroprüfkörpern zur Porengrößenmessung in Ultra-und Mikrofiltern nach Patentanspruch 1 sowie hiernach hergestellte Prüfkörper nach Patentanspruch 18.

Ultra-und Mikrofilter mit Porengrößen im Bereich von 100 Å bis 10 μm werden herkömmlich mit Hilfe von Eiweißkörpern und Bakterien von definierter Größe oder mit Hilfe von Partikeln aus Polystyrol oder anderen Plastikkörpern gemessen. Solche Prüfkörper fordern einen sehr komplexen teuren Auswahl-oder Herstellungsprozeß und weisen eine ausgeprägte thermische und chemische Labilität auf. Bereits die Arbeitsbedingungen in einem Raster-Elektronenmikroskop schließen die Verwendung eines Großteils solcher Prüfkörper aus.

Der vorliegenden Erfindung liegt die Aufgabe zugrunde, Prüfkörper auf einfachste Weise herzustellen, die eine gleichmäßige runde Form haben und enge Toleranzen im Durchmesser aufweisen, sowie chemisch und thermisch stabil sind.

Die Erfindung löst diese Aufgabe mit den Merkmalen der Kennzeichnungsteilen der Patentansprüche 1 und 17.

Dadurch daß übliche Gemische von Kugeln mit unterschiedlichen Durchmessern aus Glas, Quarz oder Metall als Ausgangsmaterial verwendet werden, können Prüfkörper mit engen Durchmessertoleranzen in gewünschter Größe leicht durch Ausselektieren erzeugt werden. Zum Ausselektieren werden Porenmasken verwendet, deren Porengrößen enge Toleranzen aufweisen. Durch Hindurchbewegen dieser Kugeln durch mehrere Porenmasken mit engtolerierten Porenöffnungen gelingt es, Prüfkörper von wenigen μm in größerer Anzahl verhältnismäßig einfach und rasch zu erzeugen.

Weitere Ausgestaltungen der Erfindungen ergeben sich aus den Unteransprüchen.

Die Erfindung wird nachfolgend anhand eines in der Zeichnung dargestellten Ausführungsbeispieles näher erläutert. In der Zeichnung zeigen:

Fig. 1 eine Ansicht von üblichen Glas-, Quarz-oder Metallkügelchen von unterschiedlichsten Größen;

Fig. 2, 3 und 4 schematische Draufsichten auf Porenmasken mit unterschiedlichen Porengrößen.

Fig. 5 eine Seitenansicht einer geänderten Porenmaske in Form einer aus Draht gewickelten Spirale.

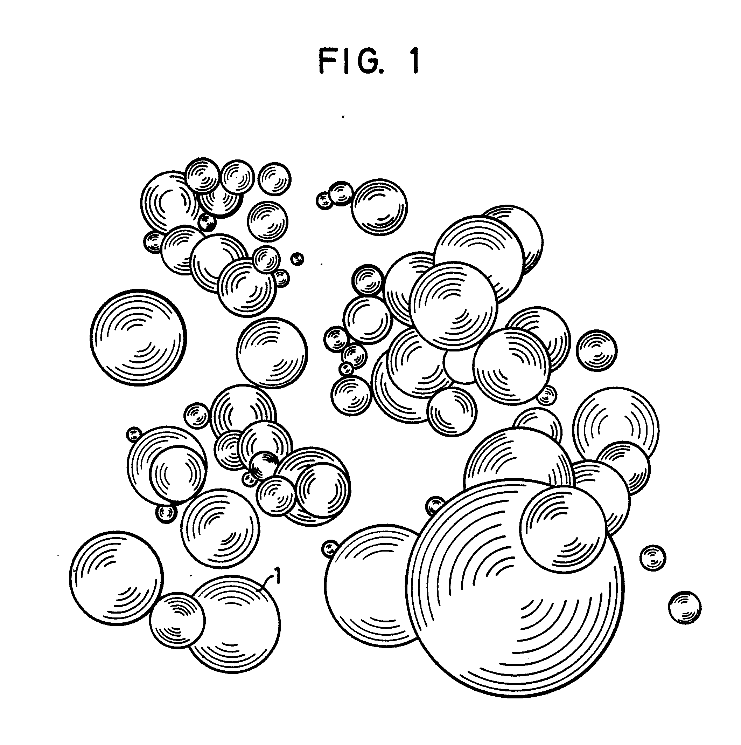

Zur Bestimmung der Porengrößen im Bereich von 100 Å bis 10 μm werden Prüfkörper 1 verwendet. Als Prüfkörper können handelsübliche Glas-, Quarz-oder Metallkügelchen Verwendung finden. Diese liegen zunächst mit unterschiedlichen Durchmessern ab ca. 0,01 μm vor, wie dies aus Fig. 1 ersichtlich ist.

Die Prüfkörper 1 können auch von Bakterien, Eiweißkörpern oder Polymerkörpern gebildet werden.

Die Prüfkörper 1 werden durch Ausselektieren z.B. der Glas-, Quarz-oder Metallkügelchen gebildet, so daß die Prüfkörper 1 im wesentlichen gleiche Durchmesser besitzen.

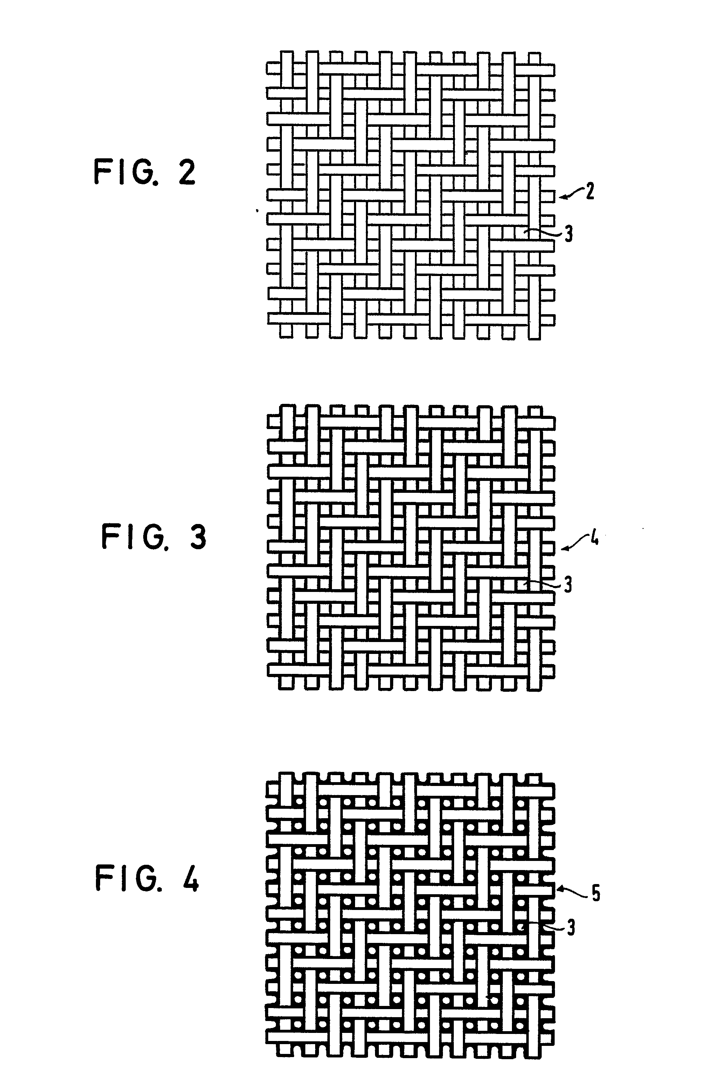

Hierzu werden z.B. die Glas-, Quarz-oder Metallkügelchen, die nach Fig. 1 mit einem Gemisch von unterschiedlichsten Durchmessern vorliegen, zunächst durch eine ebene Porenmaske 2 hindurchbewegt, die aus einem unbeschichteten, Metall-oder Kunststoffgewebe entsprechend Fig. 2 bestehen kann. Diese Porenmaske 2 besitzt Poren 3 mit im wesentlichen gleichen Größen. Die Porenmasken 2 sind bis mindestens 8 μm handelsüblich erhältlich. Unter Verwendung der Porenmaske 2 nach Fig. 2 findet eine Vorselektierung der Kügelchen nach Fig. 1 statt.

Eine weitere Selektierung der Kugeln nach Fig. 1 erfolgt unter Verwendung von ebenen Porenmasken 4 und 5 nach den Figuren 3 und 4. Die Größen der Poren 3 dieser Porenmasken 4 und 5 sind durch chemischen oder galvanischen Auftrag auf die Metall-oder Kunststoffgewebe der Porenmasken 4, 5 verringert. Es ist auch möglich, die Poren 3 durch diesen Auftrag bis zum völligen Verschluß der Poren zu verringern und dann durch Abtragen mittels eines Ätzvorganges Poren definierter kleinster Größe wieder zu bilden.

Die Glas-, Quarz-oder Metallkügelchen die die Porenmasken 2, 4 und 5 passiert haben, bilden Prüfkörper 1 mit im wesentlichen gleichen Durchmessern. Die Messung der Kugeldurchmesser erfolgt mit Licht-oder Rasterelektronenmikroskopen.

Unter Verwendung dieser Prüfkörper 1 mit definierten gleichen Größen kann die Porengröße zu prüfender Filter festgestellt werden.

Die Porengrößen der Porenmasken 2, 4, 5 können soweit verringert werden, bis auch die kleinsten Kugeln, deren Druchmesser bei 0,01 μm liegt, nicht mehr passieren können.

Die Porenmasken 2, 4, 5 können anstatt aus einem Metall oder Kunststoffgewebe auch aus Metall oder Kunststoffolien bestehen, die mittels Kernelektronen, Ionen, harten Röntgenstrahlen oder anderen kurzwelligen Strahlen großer Intensität gelocht oder geschlitzt werden.

Auch hier kann die gelochte Fläche auf chemischem oder galvanischem Weg völlig geschlossen werden und die Poren können in wünschenswertem Umfang photochemisch oder durch Ätzen wieder geöffnet werden.

Durch mehrere so hergestellte Porenmasken 2, 4, 5 kann eine größenmäßige Ordnung in gerader Reihenfolge entstehen. Im Extrem können Kügelchen mit Durchmesserdifferenzen von 0,01 μm durch Hindurchbewegen durch diese Porenmasken herausselektiert werden.

Besitzt beispielsweise eine Porenmaske Poren mit einem Durchlaß vom maximal 0,72 μm, die nächste größere Porenmaske Poren mit einem Durchlaß von 0,73 μm, so können durch Hindurchbewegen der Kügelchen nach Fig. 1 mit unterschiedlichen Durchmessern, Kugeln als Prüfkörper mit einem Minimal-Durchmesser von 0,72 μm und einem Maximal-Durchmesser von 0,73 μm herausselektiert werden.

Die Genauigkeit der Prüfkörper 1 ist folglich nicht abhängig vom Herstellungsprozeß der Prüfkörper 1 selbst, der in einer solchen Genauigkeit nicht durchführbar wäre, sondern von der Selektion geeigneter Prüfkörper aus einem beliebigen Gemisch von Kugelkörpern, dessen Zusammensetzung zufällig erfolgt. In diesem Gemisch sind aber Kügelchen mit unterschiedlichsten Durchmessern vorhanden.

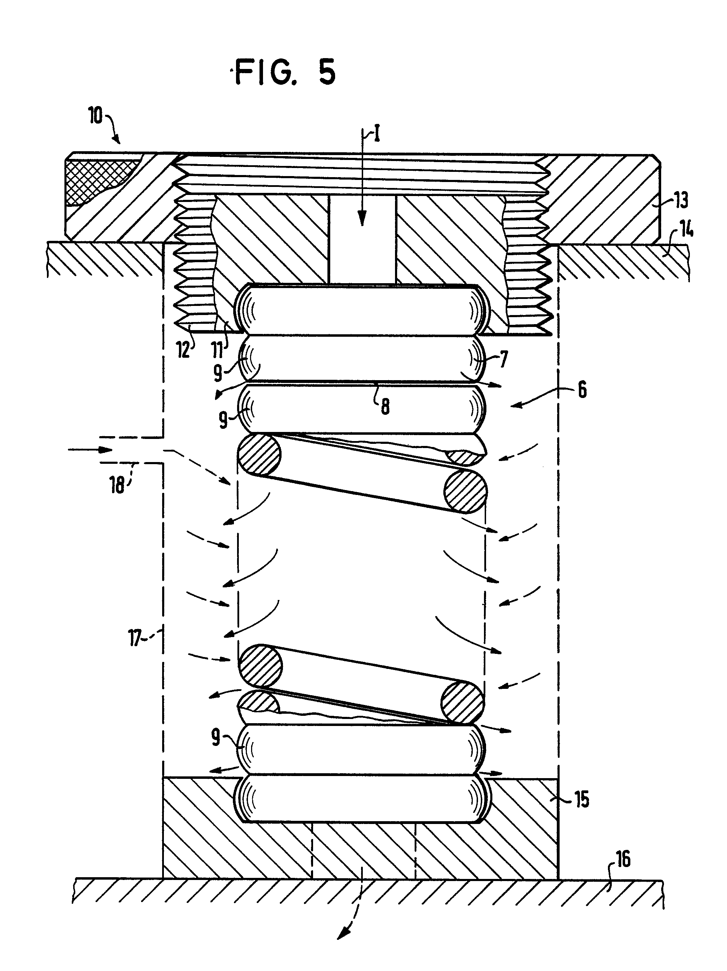

Nach einer geänderten Ausführungsform nach Fig. 5 kann die Porenmaske 6, durch die die Prüfkörper 1 zu selektieren sind, aus einer Spirale 7 aus Metall oder Kunststoff bestehen. Die Schlitzpore 8 auch dieser, als Porenmakse 6 wirkenden Spirale 7, kann chemisch, galvanisch, durch Besprühen oder durch Polymerbeschichtung weiter verengt werden, bis der vorgesehene Schlitzabstand erreicht ist.

Der Schlitzabstand der Windungen 9 der Spirale 7 kann über eine Mikrostellvorrichtung 10 oder einen nicht dargestellten Stellmotor so weit gedehnt werden, bis der vorgesehene Spaltabstand der Windungen 9 der Spirale 7 voneinander erreicht ist. Über die Dehnung der Spirale 7 wird der Spaltabstand exakt ermittelt. Die Mikrostellvorrichtung 10 umfaßt ein Halteteil 11 zum Festhalten des oberen Endes der Spirale 7. Dieses besitzt eine Feingewinde als Außengewinde 12. Mit dem Halteteil 11 wirkt eine Stellmutter 13 zusammen, die sich gegen eine feste Auflage 14 abstützt. Das untere Ende der Spirale 7 ist durch ein Halteteil 15 festgehalten, welches mit einer Auflage 16 fest verbunden ist. Durch diese Veränderung des Spaltabstandes der Windungen der Spirale 7 ist ferner eine kontinuierliche Selektion von Prüfkörpern 1 einheitlicher Größe aus einem Gemisch möglich. Es sollen z.B. aus einem Gmeisch mit Partikeln zwischen 1 und 20 μm alle Partikel im Abstand von 1 μm sortiert werden. Hierzu wird als Ausgangsporenfilter eine Spirale 7 mit Windungsabständen von 1 μm verwendet. Mit dieser Porenmaske werden alle Partikel mit einem Durchmesser von oder geringer 1 μm ausgesondert. Anschließend wird die Spirale 6 oder ein Spiralbündel auf einen Windungsabstand von 2 μm mittels der Mikrostellvorrichtung 10 gedehnt. Bei einer Spirale 7 mit einer Drahtstärke von 0,2 mm und z.B. 10.000 Windungen müßte die Dehnung folglich 10 mm betragen. Auf gleiche Weise wird in Schritten von jeweils 10 mm weiter verfahren, bis das Gemisch aufgebraucht ist.

Ein Gemisch von Partikeln 1 wird z.B. als Suspension der Spirale 7 axial in Pfeilrichtung I zugeführt. Das Halteteil 15 schließt das Bodenende der Spirale 7 ab. Somit werden die kleineren Partikel 1, die kleiner als der Spaltenabstand 8 der Windungen 9 sind, seitlich in den angegebenen Pfeilrichtungen austreten.

Zur Beschleunigung der Selektion sind hohe Drücke auf das zugeführte Gemisch vorteilhaft. Diese sind bei axialer Einführung des Gemisches in die Spirale 7 nicht erzielbar, da sich die Spirale 7 auch bei guter mechanischer Führung biegen oder dehnen kann. Die Zuführung des Gemisches unter hohem Druck kann jedoch ohne Deformation der Spirale 7 oder des Spiralenbündels radial erfolgen. Diese Lösung ist in Fig. 5 strichliert angedeutet. Die Spirale 7 ist von einem Mantel 17 umgeben, der einen Zuführstutzen 18 für das unter Druck zugeführte Partikelgemisch besitzt. Das Gemisch strömt von außen radial in die Spirale 7 wie durch strichlierte Pfeile angedeutet ein und dann am unteren Spiralende aus.

Da weder bei der axialen, noch bei der radialen Beschickung alle Gemischpartikel einer bestimmten Größe selektiert werde können, wird ein Kreislaufbetrieb durchgeführt, in dem das Gemisch so lange wiederholt durch die Spirale 7 hindurchgeführt oder von außen an der Spirale vorbeigeführt wird, bis alle Körper der gewählten Größe permeiert sind.

Nach jedem Selektiervorgang wird die Zufuhr des Gemisches gesperrt und das Permeat entnommen. Zur Reinigung der Spirale 7 von Körpern, die sich in den Windungen 9 festgesetzt haben, wird die Spirale 7 kurzzeitig gedehnt und durch Spülung oder Rückspülung von den restlichen Körpern befreit. Die Dehnung erfolgt wieder über die Mikrostellvorrichtung 10 oder einen Stellmotor.

Zum leichteren Durchdringen der Porenmasken 2, 4, 5, 6 können die Kügelchen in Form einer Suspension mit Hilfe geeigneter Apparaturen, wie Hoch-oder Unterdruck-Filterzellen, Kammerfilter oder Querstrom-Rundfilter, größenmäßig getrennt werden.

Da nicht alle Prüfkörper 1 in Suspensionsform verwendet werden können, weil z.B. das zu untersuchende Filter durch Feuchtigkeit quillt oder sich in anderer Weise deformiert, können die Prüfkörper 1 trocken gefiltert werden oder aus der jeweiligen Suspension abgefiltert und anschließend durch Flüssigkeitsentzug als trokkene Prüfkörper 1 verwendet werden.

Die Prüfkörper 1 aus Glas und Quarz gewährleisten durch ihren hohen Brechungs-Index, daß auch geringe Mengen kleinster Prüfkörper 1 mit bloßem Auge in wässrigen Lösungen gut erkennbar sind. Extreme Verdünnungen der Suspension lassen sich durch ein Spektral-Fotometer sichtbar machen.

Die Suspensionsflüssigkeit kann dabei Wasser, Öl oder dgl. sein. Durch entsprechende Flüssigkeitswahl können Toleranzmessungen der verschiedensten Art selbst bei laufenden Maschinen, z.B. Hydraulikanlagen, Verbrennungsmotoren, Pumpen, Lagern usw., verwendet werden.

Die erzeugten Prüfkörper 1 können auch als Aerosole den zu prüfenden Filtern zugeführt werden. So können Prüfkörper Gasen zur Prüfung und Überwachung von Gasfiltern beigemischt werden.

Eine leichte Erkennung der Prüfkörper 1, gegebenenfalls in Suspensionen oder Aerosolen, kann dadurch sichergestellt werden, daß die Prüfkörper 1 bei entsprechender Metallwahl magnetisiert oder bei anderer Materialwahl elektrisch geladen werden. Sie können auch durchgängig oder oberflächenmäßig gefärbt werden oder im 1-stelligen Å-Bereich chemisch beschichtet werden.

Vorzugsweise müssen die Prüfkörper kugelförmig und von glatter Oberfläche sein, so daß sie sich auch zur hochgenauen Abstandhaltung plangeschliffener Platten und deren Parallelverschiebung sowie zur hochgenauen Abstandhaltung gewickelter Folien eignen.

**Ansprüche**

1. Verfahren zur Herstellung von Mikro-Prüfkörpern zur Porengrößenmessung in Ultra-und Mikrofiltern, dadurch gekennzeichnet, daß runde Glas-, Quarz-oder Metallkugeln mit in größerem Toleranzbereich liegenden Durchmessern zur Bildung von Prüfkörpern (1) mit Durchmessern im engen Toleranzbereich durch Porenmasken (2, 4 und 5) aus Kunststoff oder Metall mit vorbestimmten unterschiedlichen Größen von Poren (3) hindurchbewegt und dadurch selektiert werden.

2. Verfahren nach Anspruch 1, dadurch gekennzeichnet, daß als Porenmasken (2, 4, 5) Metall-oder Kunststoffgewebe verwendet werden, deren Poren (3) durch chemischen oder galvanischen Metallauftrag auf die gewünschte Porengröße verengt sind.

3. Verfahren nach Anspruch 2, dadurch gekennzeichnet, daß die Porenmasken (2, 4, 5) aus Metall-oder Kunststoffolien gebildet sind, die mittels Kernelektronen, Ionen, harten Röntgenstrahlen oder anderen kurzwelligen Strahlen großer Intensität gelocht oder geschlitzt werden.

4. Verfahren nach den Ansprüchen 2 und 3, dadurch gekennzeichnet, daß die Poren (3) der Porenmasken (2, 4, 5) durch Metallauftrag zunächst verschlossen, anschließend durch Ätzen in vorbestimmter Größe geöffnet werden.

5. Verfahren nach Anspruch 1, dadurch gekennzeichnet, daß als Porenmaske (6) eine Spirale (7) aus spiralförmig eng gewickeltem Metall-oder Kunststoffdraht verwendet wird, deren Porenschlitz (8) von vorbestimmter Breite ist.

6. Verfahren nach Anspruch 5, dadurch gekennzeichnet, daß die Spirale (7) über eine Mikrostellvorrichtung (10) oder einen Stellmotor - schrittweise gedehnt wird, sich der Porenschlitz (8) somit erweitert und eine kontinuierliche Selektion von Prüfkörpern (1) aus einem Gemisch unterschiedlich großer Körper erfolgen kann.

7. Verfahren nach Anspruch 5, dadurch gekennzeichnet, daß das zu trennende Gemisch von Partikeln entweder axial in die Spirale (7) geführt wird und nach außen aus der Spirale heraustritt oder radial von außen an die Spirale heran und in diese hinein geführt wird.

8. Verfahren nach Anspruch 5, dadurch gekennzeichnet, daß die Beschickung der Spiralen (7) mit dem Gemisch von Partikeln kontinuierlich im Kreislauf erfolgt und das Ausgangsgemisch so lange in den Ausgangsbehälter zurückgeführt wird, bis alle Prüfkörper (1) der gewünschten Größe durch die Spirale (7) permeiert sind.

9. Verfahren nach Anspruch 5, dadurch gekennzeichnet, daß die Spirale (7) von Körpern, die sich zwischen den Windungen (9) festgesetzt haben, durch kurzzeitige Dehnung und Spülung oder Rückspülung gereinigt wird.

10. Verfahren nach Anspruch 1, dadurch gekennzeichnet, daß die Prüfkörper (1) aus einer großen Menge von Kugeln mit völlig unterschiedlichem Durchmesser, gegebenenfalls in einer Suspension oder in einem Aerosol durch Hindurchbewegen durch mehrere Porenmasken durch Totend-oder Querstromfiltration selektiert werden.

11. Verfahren nach Anspruch 1, dadurch gekennzeichnet, daß zur Selektion der Prüfkörper (1) Porenmasken (2, 4, 5, 6) verwendet werden, deren maximale Porengrößen so eng benachbart sind, daß Selektionen bis in den 3-stelligen Å-Bereich möglich sind.

12. Verfahren nach Anspruch 10, dadurch gekennzeichnet, daß die in einer Suspension enthaltenen Prüfkörper (1) nach dem Ausselektieren getrocknet und als Trockenprüfkörper für Porenmessungen von Filtern verwendet werden.

13. Verfahren nach Anspruch 12, dadurch gekennzeichnet, daß als Suspensionsflüssigkeit Wasser, Öl oder dgl. verwendet werden und Toleranzmessungen in laufenden Vorrichtungen und Maschinen durchgeführt werden.

14. Verfahren nach Anspruch 1, dadurch gekennzeichnet, daß die Prüfkörper (1) Gasen zur Prüfung und Überwachung von Gasfiltern beigemischt werden.

15. Verfahren nach Anspruch 1, dadurch gekennzeichnet, daß die Prüfkörper (1) zu ihrer leichteren Erfassung magnetisiert oder elektrisch geladen werden.

16. Verfahren nach Anspruch 1, dadurch gekennzeichnet, daß die Prüfkörper (1) zur besseren Erkennbarkeit durchgängig gefärbt, oberflächenmäßig gefärbt oder im 1-stelligen Å-Bereich chemisch beschichtet werden.

17. Verfahren nach Anspruch 1, dadurch gekennzeichnet, daß anstatt Glas-, Quarz-oder Metallkugeln zur Bildung von Prüfkörpern, Bakterien, Eiweißkörper oder Polymerkörper verwendet werden.

18. Prüfkörper nach einem oder mehreren der vorstehenden Ansprüche hergestellt, dadurch gekennzeichnet, daß sie aus Glas-, Quarz-oder Metallkugeln mit im wesentlichen gleichen Mikrodurchmessern bestehen.

19. Prüfkörper nach dem vorstehenden Anspruch, dadurch gekennzeichnet, daß die Glas-, Quarz-oder Metallkugeln durchgefärbt, oberflächengefärbt oder beschichtet sind.

20. Prüfkörper nach einem oder mehreren der vorstehenden Ansprüche hergestellt, dadurch gekennzeichnet, daß die zu selektierenden Prüfkörper aus Bakterien, Eiweißkörpern oder Polymerkörpern bestehen.

# FIG. 1

FIG. 2

FIG. 3

FIG. 4

# FIG. 5